# EUROPEAN PATENT APPLICATION

(11) **EP 1 518 891 A1**
(43) Date of publication of application: **30.03.2005**
(21) Application number: 04021925.5
(22) Date of filing: 15.09.2004
(51) Int. Cl.: C08K 3/04, F16D 63/00

(54) **Synthetic resin and bearing parts made thereform**

(30) Priority: 18.09.2003 JP 2003325584
(71) Applicant: Minebea Co., Ltd., Nagano-ken 389-0293 (JP)
(72) Inventor: Hokkirigawa, Kazuo c/o Minebea Co.,Ltd., Kitasaku-Gun, Nagano-Ken, 389-0293 (JP); Akiyama, Motoharu c/o Minebea Co., Ltd., Kitasaku-Gun, Nagano-Ken 389-0293 (JP); Kawamura, Morinobu c/o Minebea Co.,Ltd., Kitasaku-Gun, Nagano-Ken 389-0293 (JP)
(74) Representative: VOSSIUS & PARTNER

(57) **Abstract**

According to the invention, a synthetic resin composition for the manufacture of parts which require a low coefficient of friction for example bearing parts or other sliding parts having a number of desirable properties is provided. The resin composition is made of a fine powder of RBC, CRBC and mixtures of RBC and CRBC dispersed in a synthetic resin. The RBC and /or CRBC fine powder have an average particle diameter of less than 10µm, optionally 1 to less than 10µm, preferably 1µm to 5µm. Desirably the weight percent of the RBC and/or CRBC is from 10% to 70% preferably from 30% to 70% of the entire composition and is uniformly dispersed in the resin.
In another aspect of the invention, parts desirably having particularly a low coefficient of friction are fabricated according to the invention from the resin composition. The parts can be made molded desirably extrusion or injection molded from the resin composition according to the invention to form for a bearing or portion thereof or other device requiring a low coefficient of friction. The fabricated products are desirable for use with or without lubrication. The resulting products have a desirable low coefficient of friction improved durability, mechanical strength, and lubricating oil retention.

## Description

### BACKGROUND OF THE INVENTION

### Field of the Invention

The present invention relates to a synthetic resin composition having excellent tribological characteristics, and parts having a low coefficient of friction made from the synthetic resin composition.

### Description of the Prior Art

RBC (RB ceramic) and CRBC (CRB ceramic) are known as a carbon material which can be molded into a solid piece. (cf. Kinou Zairyou (Functional Materials), May 1997, Vol. 17, No. 5, pages 24-28. Materials for sliding parts for example bearing retainers employing RBC (RB ceramic) or CRBC (CRB ceramic) have been described in the art. See: US pat. No. 6,395,677. They are light and satisfy the mechanical, chemical and physical characteristics required of a retainer, however they have the unique problems of ceramics in that temperature control or quality control make their production difficult.

Resins employed for a conventional bearing retainer include aromatic nylon such as nylon 66, nylon 6, nylon 11 and polyphthalamide; a polyamide resin, a polyester resin such as polybutylene terephthalate and polyethylene terephthalate; a polyolefine resin such as polypropylene and polyethylene; and polyacetal. Among these resins, a polyamide resin whose representative example is nylon 66 has been widely employed. (cf Japanese Laid Open Patent Application Publication No. H03-200871.) Although polyamide resins such as nylon 66 have properties to meet the mechanical, chemical and physical characteristics required of retainers, there remains room for improvement in friction characteristics, wear characteristics and lubricant oil retention characteristics.

Fullerene is known as a carbon cluster. Fullerene having 60 carbon atoms with the shape of a soccer ball, fullerene having 70 carbon atoms with the shape of a rugby ball and fullerene having more carbon atoms such as 76, 78, 82, 84, 90 and 96 carbon atoms are well known. (cf.Japanese Laid Open Patent Application Publication No. 2003-11901).

### SUMMARY OF THE INVENTION

According to the invention, a synthetic resin composition for the manufacture of parts which require a low coefficient of friction for example bearing parts or other sliding parts having a number of desirable properties is provided. The resin composition is made of a fine powder of RBC, CRBC and mixtures of RBC and CRBC dispersed in a synthetic resin. The RBC and /or CRBC fine powder have an average particle diameter of less than 10 µm desirably 1 to less than 10µm preferably 1µm to 5µm. Desirably the weight percent of the RBC and/or CRBC is from 10% to 70% preferably from 30% to 70% of the entire composition and is uniformly dispersed in the resin.

In another aspect of the invention, parts having a low coefficient of friction are fabricated according to the invention from the resin composition. The parts can be molded, desirably extrusion or injection molded, from the resin composition according to the invention to form for a bearing or portion thereof or other device requiring a low coefficient of friction. The fabricated products are desirable for use with or without lubrication. The resulting products have a desirable low coefficient of friction improved durability, mechanical strength, and lubricating oil retention.

In still a further aspect of the invention, a synthetic resin composition for a bearing retainer with improved friction, wear, mechanical strength and lubricant oil retention characteristics is provided. According to the invention, fine RBC and/or CRBC powder having an average particle diameter of 1µm to less than 10µm, is mixed with a synthetic resin. The amount of the fine RBC and/or CRBC fine powder is 10~70Wt% of the entire composition and desirably uniformly dispersed within the resin composition. Preferably, along with fine RBC or CRBC powder, fibers or carbon clusters are mixed to the composition, where the amount of the fibers and carbon clusters are 0.1 to 50 Wt% and 0.1 to 5 Wt% of the entire composition, respectively. The resulting bearing retainer has improved characteristics, not only in friction, wear and lubricant oil retention but also in mechanical strength. The resulting bearing retainer can be simply manufactured by extrusion or injection molding.

It is an object of the invention to provide bearing part having a lowered friction coefficient.

It is an object of the invention to provide bearing part having a reduced difference in friction coefficient between a low sliding velocity range and a high sliding velocity range.

It is an object of the invention to provide bearing part that is more durable.

It is an object of the invention to provide bearing part having improved lubricant oil retention.

It is an object of the invention to provide bearing part having improved mechanical characteristics.

It is an object of the invention to provide resin compositions for the efficient manufacture of bearing retainers under the same conditions as those used for conventional bearing retainers.

Other and further objects will be apparent from the appended specification and drawings. It should be specifically understood that each embodiment of the invention will not necessarily achieve every object of the invention.

The preferred embodiment of the present invention is illustrated in the drawings and examples. However, it should be expressly, understood that the present invention should not be limited solely to the illustrative embodiment.

### BRIEF DESCRIPTION OF THE DRAWINGS

Fig. 1 is a summarized schematic drawing of a friction test.
Fig. 2 is a graph showing the relationship between friction coefficients and slip velocities with no lubricant and fine RBC powder with an average particle diameter of 150 microns.
Fig. 3 is a graph showing the relationship between friction coefficients and slip velocities with no lubricant and fine RBC powder with an average particle diameter of 30 microns.
Fig. 4 is a graph showing the relationship between friction coefficients and slip velocities with no lubricant and fine RBC powder with an average particle diameter of 3 microns.
Fig. 5 is a graph showing the relationship between friction coefficients and slip velocities with no lubricant and with glass fibers.
Fig. 6 is a graph showing the relationship between friction coefficients and slip velocities with no lubricant and with Fullerene.
Fig. 7 is a graph showing the relationship between friction coefficients and slip velocities with ester oil lubricant and fine RBC powder with an average particle diameter of 150 microns.
Fig. 8 is a graph showing the relationship between friction coefficients and slip velocities with an ester oil lubricant and fine RBC powder with an average particle diameter of 30 microns.
Fig. 9 is a graph showing the relationship between friction coefficients and slip velocities with an ester oil lubricant and fine RBC powder with an average particle diameter of 3 microns.
Fig. 10 is a graph showing the relationship between friction coefficients and slip velocities with ester oil lubricant and with glass fibers.
Fig. 11 is a graph showing the relationship between friction coefficients and slip velocities with ester oil lubricant and with fullerene.
Fig. 12 is a graph showing the relationship between critical wear losses and amounts of contained fine RBC or CRBC powder with no lubricant.
Fig.13 is a graph showing the relationship between specific wear losses and amounts of contained fine RBC or CRBC powder with an ester oil lubricant.
Fig. 14 is a graph showing the relationship between critical numbers of repetitions under friction and amounts of contained fine RBC or CRBC powder with an ester oil lubricant.
Fig. 15 is a graph showing the influence of weight fraction of RB ceramics particles on tensile strength.
Fig. 16 is a graph showing the influence of weight fraction of RB ceramics particles on flexural strength.
Fig. 17 is a graph showing the influence of weight fraction of RB ceramics particles on flexural modulus.
Fig. 18 is a graph showing the influence of average particle diameter of RBC particles on relationship between fiction coefficient and sliding velocity in atmosphere without lubrication.
Fig. 19 is a graph showing the influence of weight fraction of RBC particles on relationship between friction coefficient and sliding velocity in atmosphere without lubrication.
Fig. 20 is a graph showing the influence of weight fraction and average particle diameter of RBC particles on specific wear rate in atmosphere without lubrication.
Fig. 21 is a graph showing the friction progress curve with lubrication using ester oil.
Fig. 22 is a graph showing the relationship between friction coefficient and sliding velocity with lubrication using ester oil.
Fig. 23 is a graph showing the relationship between friction coefficient and sliding velocity with lubrication using ester oil.
Fig. 24 is a graph showing friction progress curve in sliding with lubrication by ester oil thin film.
Fig. 25 is a graph showing the influence of weight fraction of RBC particles on critical number of friction repetitions with lubrication by ester oil thin film.
Fig. 26 is electron micrographs of test pieces made with RBC fine particles

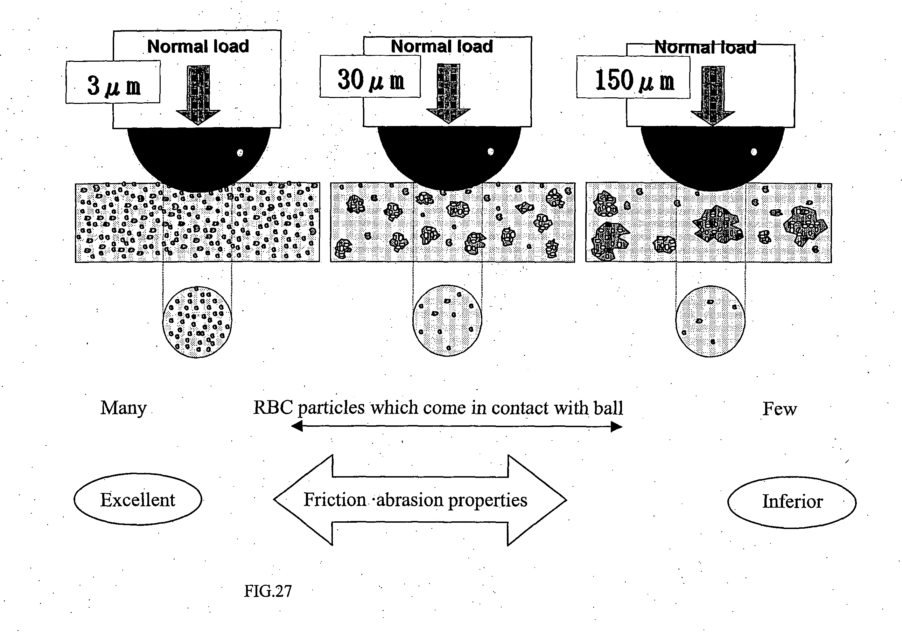

Fig. 27 is a schematic depiction of the distribution of RBC fine particles in test pieces.
Fig. 28 is a graph showing particle size distribution in RBC test pieces.

### DETAILED DESCRIPTION OF THE INVENTION

According to the invention, a synthetic resin composition for the manufacture of parts which require a low coefficient of friction for example bearing parts or other sliding parts having a number of desirable properties is provided. The resin composition is made of a fine powder of RBC , CRBC and mixtures of RBC and CRBC dispersed in a synthetic resin. The RBC and /or CRBC fine powder have an average particle diameter of less than 10µm optionally 1 to less than 10µm desirably about 1µm to 5um, desirably about 3µm to 5µm preferably about 3µm. Desirably the weight percent of the RBC and/or CRBC is from 10% to 70% preferably from 40% to 70% desirably 50 to 70% optionally 30% to 50% of the entire composition. The RCB and/or CRBC fine powder is preferably uniformly dispersed in the resin. Sliding parts and/or bearing components made with resin composition according to the invention have a low coefficient of friction. In addition, components made according to the invention have a high tensile strength, a high flexural strength, an improved flexural modulus as well as a better stability of the friction coefficient against sliding velocity.

As for the ratio of added fine RBC and/ or CRBC powder, it is desired that the amount of contained fine RCB or CRBC powder should be 10 to 70 Wt% of the entire composition. In particular, a range of 40 to 70 Wt% is desirable. When the ratio of added fine RBC and/or CRBC powder exceeds 70 Wt%, the mechanical characteristics of the resin composition deteriorate, and when it is below 10 Wt%, the lubricant oil retention characteristics deteriorate.

Examples of a synthetic resin which can be employed in the present invention include thermoplastic resins such as polyamide, polyester, polyolefin and polyacetal. Specifically, such thermoplastic resins include an aromatic nylon such as nylon 66 (polyhexamethylene adipamide), nylon 6 (polycapramide), nylon 11 (polyundecanamide), nylon 12 and polyphthalamide, polybutylene terephthalate, polyethylene terephthalate, polypropylene, polyethylene, POM and so forth. In particular, nylon 66, nylon 11, polyphthalamide, polybutylene terephthalate, polypropylene, POM and so forth are desirably employed. These thermoplastic resins may be employed singly or in combination of two or more.

Furthermore, within a range in which one does not deviate from the scope of the present invention, a thermoplastic and thermosetting resin may be used together. Examples of a thermosetting resin include a phenol resin, a diarylphthalate resin, an unsaturated polyester resin, an epoxy resin, a polyimide resin, a triazine resin and so forth.

RBC and CRBC can be prepared by a method known in the prior art. The prior art teaches the carbon material, RBC, and a method to produce it, wherein defatted bran obtained from rice bran and a thermosetting resin are mixed, molded under pressure and dried, and then the molded and dried pieces are sintered in an inert gas environment. As a thermosetting resin, any material may be used as long as it is thermosetting. Representative thermosetting resins include a phenol resin, a diarylphthalate resin, an unsaturated polyester resin, an epoxy resin, a polyimide resin, and a triazine resin. In particular, a phenol resin is preferably employed. The mixing ratio of defatted rice bran and a thermosetting resin is in a range of 50 to 90 : 50 to 10 by weight, but preferably, a ratio of 75:25 is employed. The sintering temperature is 700°C to 1,000°C, and normally a rotary kiln is employed. The time duration for sintering is 40 minutes to 140 minutes.

CRBC is also a known carbon material. It is an improved RB ceramic which is made of a thermosetting resin and defatted rice bran obtained from rice bran. It is a black resin or a porous ceramic which is obtained by mixing and kneading defatted rice bran obtained from rice bran and a thermosetting resin, preliminarily sintering the mixture at 700°C to 1,000°C in an inert gas, then crushing the material into carbon powder of 100 mesh or fmer, kneading said carbon powder and the thermosetting resin, molded it under a pressure of 20 MPa to 30 MPa, and then thermally treating the material again at 300°C to 1,100°C in an inert gas environment. See: Kinou Zairyou (Functional Materials), May 1997, Vol. 17, No. 5, pages 24-28.

According to the invention, an anti-aging agent, an anti-oxidant agent or a stabilizing agent may be added as necessary to a synthetic resin composition of the present invention. An appropriate agent(s) may be selected according to the type of a synthetic resin employed.

As an anti-aging agent employed in the present invention, in the case of polyamide, an amine anti-aging agent may be selected. For instance, examples of amine anti-aging agents include a diaryl-p-phenylenediamine anti-aging agent such as N, N'-diphenyl-p-phenylenediamine, N, N'-di-2-naphthyl-p-phenylenediamine and so forth; an arylalkyl-p-phenylendiamine anti-aging agent such as N-phenyl-N'-isopropyl-p-phenylenediamine, N-phenyl-N'-(1, 3-dimethyl)-p-phenylenediamine, N-phenyl-N'-cyclohexyl-p-phenylenediamine and the like; and a diphenylamine anti-aging agent such as alkylated-diphenylamide, 4, 4'-dioctyldiphenylamine and so forth.

As a stabilizing agent, there are thermal stabilizers which are represented by phosphate ester and phosphite ester, or optical stabilizers such as a hindered amine optical stabilizer, a phenyl benzoate optical stabilizer, a nickel complex salt and the like. Concrete examples of hindered amine or phenyl benzoate optical stabilizers include bis(2, 2, 6, 6-tetramethyl-4-pipergyl)sepacate, a condensate of succinic acid and N-(2-hydroxypropyl)-2,2,6,6-tetramethyl-4-hydroxypiperidine, tetrakis(2, 2, 6, 6-tetramethyl-4-pipergyl), 1,2,3,4-butanetetracarboxylate, a polycondensate of N, N'-bis(2, 2, 6, 6-tetramethyl-4-pipergyl)hexamethylenediamine and 1,2-dibromoethane, bis(2,2,6,6-tetramethylpipergyl)adipate, bis(2, 2, 6, 6-tetramethylpipergyl)fumarate, poly[[6-(1, 1, 3, 3-tetramethylbutyl)imino-1, 3, 5-triazine-2,4-diyl][(2, 2, 6, 6-tetramethyl-4-pipergyl)imino]hexamethylene[(2, 2, 6, 6-tetramethyl-4-pipergyl)imino], 2,4-di-t-butylphenyl-3,5-di-t-butyl-4-hydroxybenzoate, 4-octylphenyl-3,5-di-t-butyl-4-hydroxybenzoate, n-hexadecyl-3,5-di-t-butyl-4-hydroxybenzoate, and so forth. Examples of anti-oxidants employed in a synthetic resin composition for a bearing retainer of the present invention include phenol-, phosphate- and sulfur-related materials. Examples of phenol anti-oxidants include 2,6-di-t-butyl-4-methyl-4-methylphenol, tris(3, 5-di-t-butyl-4-hydroxybenzyl)isocyanurate, tetrakis[methylene-3-(3, 5-di-t-butyl-4-hydroxyphenyl)propionate]methane, n-octadecyl-3-(3', 5'-di-t-butyl-4'-hydroxyphenyl)propionate, 4,4'butyldenebis-(3-methyl-6-t-butylphenol, triethyleneglycol-bis[3-(3-t-butyl-4-hydroxy-5-methylphenyl)propyonate], 3,9-bis[2-[3 (3-t-butyl-4-hydroxy-5-methylphenyl)propionyloxy]-1,1-dimethylether]-2,4,8,10-tetraoxaspiro[5, 5]undecane and so forth. Moreover, examples of phosphate anti-oxidants include trisnonylphenyl phosphite, distearylpentaerythritol diphosphite, tris(2, 4-di-t-butylphenyl)phosphite, tetrakis(2, 4-di-t-butylphenyl)-4,4'-biphenylene-di-phosphonite, bis(2, 4-di-t-butylphenyl)pentaerythritol diphosphite, bis(2, 6-di-t-butyl-4-methylphenyl)pentaerythritol diphosphite, 2,2,-methylenbis(4, 6-di-t-butylphenyl)octyl phosphite and so forth. Examples of sulfur family anti-oxidants include dilauryl-3,3'-thiodipropionate, dimyristyl-3,3'-thiodipropionate, distearyl-3,3'-thiodipropionate, pentaerythritol tesrakis(3-laurylthiopropionate).

A fire retardant agent may be added to a synthetic resin composition for sliding parts such as a bearing retainer of the present invention as needed. Examples of fire retardant agents include halogen compounds such as a tetrabromobisphenol A derivative, hexabromodiphenyl ether, and tetrabromophthalic anhydride; phosphorus compounds such as triphenyl phosphate, triphenyl phosphite, red phosphorus, and ammonium polyphosphate; nitric compounds such as urea and guanidine; silicon compounds such as a silicon oil, organic silane and aluminum silicate; and antimony compounds such as antimony trioxide, and antimony phosphate.

In another aspect of the invention, parts having a low coefficient of friction are fabricated according to the invention from the resin composition. The parts can be molded desirably extrusion or injection molded preferably injection molded from the resin composition according to the invention to form a bearing or portion thereof or other part or device requiring a low coefficient of friction. The fabricated products are desirable for use with and without lubrication. The resulting products have a desirable low coefficient of friction, improved durability, mechanical strength, and lubricating oil retention. The resulting products have superior tensile strength, flexural strength and flexural modulus.

According to the invention sliding parts for example bearing parts desirably bearing retainers are provided with a lowered friction coefficient. In addition the part made according have a reduced difference in friction coefficient between a low sliding velocity range and a high sliding velocity range. The products wear less readily. Lubricant oil retention characteristics are also improved. Production efficiency is not compromised since the bearing retainers can be molded under similar conditions as those for conventional bearing retainers. A variety of sliding components can be made with the resin compositions according to the invention, for example roller bearings with and without lubrication translatory roller bearings, seals, quiet brakes, spike pins, quiet journal roller bearings as well as other sliding members.

In still a further aspect of the invention, a synthetic resin composition for a bearing retainer with improved friction, wear, mechanical strength and lubricant oil retention characteristics is provided. According to the invention, fine RBC and/or CRBC powder having an average particle diameter of 1 µm to less than 10 µm, is mixed with a synthetic resin. The amount of the RBC and/or CRBC fine powder is 10~70Wt% of the entire composition preferably from 40% to 70% desirably 50 to 70% optionally 30% to 50% of the entire composition and desirably uniformly dispersed within the resin composition. Along with fine RBC or CRBC powder, fibers or carbon clusters are mixed to the composition, where the amount of the fibers and carbon clusters are 0.1~ 50 Wt% and 0.1 ~ 5 Wt% of the entire composition, respectively. The resulting bearing retainer has improved characteristics, not only in friction, wear and lubricant oil retention but also in mechanical strength.

Mixing fibers or carbon clusters together with fine RBC and/or CRBC powder and synthetic resins additionally improves the mechanical characteristics. The fibers according to the present invention, include inorganic fibers such as glass fibers, rock wool, carbon fibers and the like; synthetic fibers such as polyester fibers, rayon fibers, polyvinyl alcohol fibers, polyamide fibers, polyolefin fibers, acryl fibers, aramid fibers and the like; or lumber pulps, or other natural pulp fibers such as wood pulp and Manila hemp. As a result, the strength of molded products can be increased. Desirably, commercially available fibers are employed. Long or short fibers will similarly satisfy the purpose. The amount of the mixed fibers can be 0.1 ~ 50 Wt% of the entire composition, however, in view of enhancing the strength and lubricating characteristics, 1 ~ 30 Wt%, in particular 10 ~ 25 Wt%, is desirable.

The carbon clusters employed in the present invention are preferably fullerenes. Those with carbon number 60, or 70 or a mixture thereof may be employed. Examples of commercially available fullerenes include "Fullerene 60" (product name) and "Mix Fullerene" (product name) by Frontier Carbon Corp.

"Mix Fullerene" contains Fullerene 60 and Fullerene 70 at a weight ratio of about 70 : 30. Further, Mix Fullerene dispenses well. Therefore it is desirably employed in the present invention. When carbon clusters are employed in the present invention, desirably, fine RBC or CRBC powder has an average particle diameter of 1 ~ 10 microns or less. When 0.1 Wt% or less of fullerene is added, no effects are observed. When 5 Wt% or more is added, no change is observed in its effects.

The resulting bearing retainer can be simply manufactured by extrusion or injection molding. Preferably, the bearing retainer is manufactured by injection molding.

The present invention is explained further in detail based on examples.

Prior to the examples, a test piece A was produced for the purpose of comparison.

### (Preparation of Test Piece A).

100g of nylon 66 pellets were employed as a source resin material and injection-molded to produce a test piece A with a diameter of 50mm and a thickness of 3mm.

### EXAMPLE 1

### (PRODUCTION OF FINE RBC POWDER)

75 kg of defatted rice bran which was obtained from rice bran and 25 kg of a phenol resin in a liquid form (resole) were mixed and kneaded while they were heated at 50°C ~ 60°C. A uniform mixture with plasticity was obtained.

The mixture was sintered in a nitrogen environment using a rotary kiln at 950°C for 120 minutes. An obtained carbonized sintered material passed through a 170 mesh sieve to obtain fine RBC powder with an average particle diameter of 140 microns ~ 160 microns.

### (MOLDING OF A TEST PIECE B)

30g of the fine RBC powder with an average particle diameter of 150 microns and 70g of nylon 66 pellets were melted and mixed. An obtained resin composition was employed as a source resin material and injection-molded to produce a test piece B with a diameter of 50 mm and a thickness of 3 mm.

### EXAMPLE 2

### (PRODUCTION OF FINE RBC POWDER)

The fine RBC powder which was produced in Example 1 was employed.

### (Production of a Test Piece C).

50g of the fine RBC powder with an average particle diameter of 150 microns and 50g of nylon 66 pellets were melted and mixed. An obtained resin composition was employed as a source resin material and injection-molded to produce a test piece C with a diameter of 50 mm and a thickness of 3 mm.

### EXAMPLE 3

### (PRODUCTION OF FINE CRBC POWDER)

75 kg of defatted rice bran which was obtained from rice bran and 25 kg of phenol resin in a liquid form (resole) were mixed and kneaded as they were heated at 50°C ~ 60°C. A uniform mixture with plasticity was obtained.

The mixture was sintered in a nitrogen environment using a rotary kiln at 1,000°C for 120 minutes. An obtained carbonized sintered material passed through a 100 mesh sieve to obtain fine RBC powder with an average particle diameter of 240 microns ~ 260 microns.

65 kg of fine RBC powder thus obtained and 35 kg of a phenol resin in a solid form (resole) were mixed and kneaded as they were heated at 100°C ~ 150°C. A mixture of uniform quality with plasticity was obtained.

Next, the material with plasticity was molded into a sphere with a diameter of approximately 2 cm under a pressure of 22 MPa. The temperature of a metal mold was 150°C.

The molded piece was removed from the metal mold and was heated to increase its temperature at a rate of 3°C/minute until the temperature reached 500°C. Then the temperature was maintained at 500°C for 30 minutes, and the molded piece was sintered at 1,000° for 120 minutes.

Next, the temperature was lowered at a rate of 2 ~ 3°C/minute until it reached 500°C. When the temperature reached 500°C or lower, the piece was left to cool down.

The obtained spherical CRBC molded material with a diameter of approximately 2 cm was crushed employing a pulverizing device, and then passed through an 800 mesh sieve to obtain fine CRBC powder with an average particle diameter of 30 microns.

### (Molding of a Test Piece).

50g of the fine CRBC powder with an average particle diameter of 30 microns and 50g of nylon 66 pellets were melted and mixed. An obtained resin composition was employed as a source resin material and injection-molded to produce a test piece D with a diameter of 50 mm and a thickness of 3 mm.

### EXAMPLE 4

### (PRODUCTION OF FINE RBC POWDER)

The fine RBC powder which was produced in Example 1 was employed. (Production of a Test Piece E).

70g of the fine RBC powder with an average particle diameter of 150 microns and 30g of nylon 66 pellets were melted and mixed. An obtained resin composition was employed as a source resin material and injection-molded to produce a test piece E with a diameter of 50 mm and a thickness of 3 mm.

### EXAMPLE 5

### (PRODUCTION OF FINE RBC POWDER)

The fine RBC powder which was produced in Example 1 was employed.

### (Production of a Test Piece F)

10g of the fine RBC powder with an average particle diameter of 150 microns and 90g of nylon 66 pellets were melted and mixed. An obtained resin composition was employed as a source resin material and injection-molded to produce a test piece F with a diameter of 50 mm and a thickness of 3 mm.

### EXAMPLE 6

### (PRODUCTION OF FINE RBC POWDER)

The fine RBC powder which was produced in Example 1 was employed.

### (Production of a Test Piece G).

20g of the fine RBC powder with an average particle diameter of 150 microns and 80g of nylon 66 pellets were melted and mixed. An obtained resin composition was employed as a source resin material and injection-molded to produce a test piece G with a diameter of 50 mm and a thickness of 3 mm.

### EXAMPLE 7

### (PRODUCTION OF A TEST PIECE H)

23g of commercially available glass fibers and 77g of nylon 66 pellets were melted and mixed. An obtained resin composition was employed as a source resin material and injection-molded to produce a test piece H with a diameter of 50 mm and a thickness of 3 mm.

### EXAMPLE 8

### (PRODUCTION OF FINE RBC POWDER)

The fine RBC powder which was produced in Example 1 was employed.

### (Production of a Test Piece I).

10g of the fine RBC powder with an average particle diameter of 150 microns and the composition of nylon 66 with glass fibers in Example 7 were melted and mixed to give a resin composition. The resin composition was employed as a source resin material and injection-molded to produce a test piece I with a diameter of 50 mm and a thickness of 3 mm.

### EXAMPLE 9

### (PRODUCTION OF FINE RBC POWDER)

The fme RBC powder which was produced in Example 1 was further crushed employing a pulverizing device and passed through an 800 mesh sieve to obtain fine RBC powder with an average particle diameter of 30 microns.

### (Production a Test Piece J)

30g of fme RBC powder with an average particle diameter of 30 microns and 70g of nylon 66 pellets were melted and mixed. An obtained resin composition was employed as a source resin material and injection-molded to produce a test piece J with a diameter of 50 mm and a thickness of 3 mm.

### EXAMPLE 10

### (PRODUCTION OF FINE RBC POWDER)

The fine RBC powder which was produced in Example 9 was employed.

### (PRODUCTION OF A TEST PIECE K)

70g of fine RBC powder with an average particle diameter of 30 microns and 30g of nylon 66 pellets were melted and mixed. An obtained resin composition was employed as a source resin material and injection-molded to produce a test piece K with a diameter of 50 mm and a thickness of 3 mm.

### EXAMPLE 11

### (PRODUCTION OF FINE RBC POWDER)

The fine RBC powder which was produced in Example 9 was further crushed employing a pulverizing device to obtain fine RBC powder with an average particle diameter of 3 microns (a normal distribution with σ of 1. 632).

### (PRODUCTION OF A TEST PIECE L)

5g of the fme RBC powder with an average particle diameter of 3 microns and 95g of nylon 66 pellets were melted and mixed. An obtained resin composition was employed as a source resin material and injection-molded to produce a test piece L with a diameter of 50 mm and a thickness of 3 mm.

### EXAMPLE 12

### (PRODUCTION OF FINE RBC POWDER)

The fine RBC powder which was produced in Example 11 was employed.

### (PRODUCTION OF A TEST PIECE M)

10g of the fine RBC powder with an average particle diameter of 3 microns and 90g of nylon 66 pellets were melted and mixed. An obtained resin composition was employed as a source resin material and injection-molded to produce a test piece M with a diameter of 50 mm and a thickness of 3 mm.

### EXAMPLE 13

### (PRODUCTION OF FINE RBC POWDER)

The fine RBC powder which was produced in Example 11 was employed.

### (Production of a Test Piece N)

20g of the fme RBC powder with an average particle diameter of 3 microns and 80g of nylon 66 pellets were melted and mixed. An obtained resin composition was employed as a source resin material and injection-molded to produce a test piece N with a diameter of 50 mm and a thickness of 3 mm.

### EXAMPLE 14

### (PRODUCTION OF FINE RBC POWDER)

The fine RBC powder which was produced in Example 11 was employed.

### (Production of a Test Piece O).

30g of the fine RBC powder with an average particle diameter of 3 microns and 70g of nylon 66 pellets were melted and mixed. An obtained resin composition was employed as a source resin material and injection-molded to produce a test piece O with a diameter of 50 mm and a thickness of 3 mm.

### EXAMPLE 15

### (PRODUCTION OF FINE RBC POWDER)

The fine RBC powder which was produced in Example 11 was employed.

### (Production of a Test Piece P).

50g of the fine RBC powder with an average particle diameter of 3 microns and 50g of nylon 66 pellets were melted and mixed. An obtained resin composition was employed as a source resin material and Injection-molded to produce a test piece P with a diameter of 50 mm and a thickness of 3 mm.

### EXAMPLE 16

### (PRODUCTION OF FINE RBC POWDER)

The fine RBC powder which was produced in Example 11 was employed.

### (Production of a Test Piece Q).

30g of the fine RBC powder with an average particle diameter of 3 microns, 69.9g of nylon 66 pellets and further 0.1 g of fullerene ("Mixed Fullerene" (product name) by Frontier Carbon Corp.) were melted and mixed. An obtained resin composition was employed as a source resin material and injection-molded to produce a test piece Q with a diameter of 50 mm and a thickness of 3 mm.

### EXAMPLE 17

### (PRODUCTION OF FINE RBC POWDER)

The fine RBC powder which was produced in Example 11 was employed.

### (Production of a Test Piece R).

30g of the fine RBC powder having an average particle diameter of 3 microns, 69.5g of nylon 66 pellets and further 0.5g of fullerene ("Mixed Fullerene" (product name) of Frontier Carbon Corp.) were melted and mixed. An obtained resin composition was employed as a source resin material and injection-molded to produce a test piece R with a diameter of 50 mm and a thickness of 3 mm.

### EXAMPLE 18

### (PRODUCTION OF FINE RBC POWDER)

The fine RBC powder which was produced in Example 11 was employed.

### (Production of a Test Piece S).

30g of the fine RBC powder having an average particle diameter of 3 microns, 69g of nylon 66 pellets and further 1g of fullerene ("Mixed Fullerene" (product name) of Frontier Carbon Corp.) were melted and mixed. An obtained resin composition was employed as a source resin material and injection-molded to produce a test piece S with a diameter of 50 mm and a thickness of 3 mm.

### EXAMPLE 19

### (PRODUCTION OF FINE RBC POWDER)

The fine RBC powder which was produced in Example 11 was employed.

### (Production of a Test Piece T).

30g of the fine RBC powder with an average particle diameter of 3 microns, 68g of nylon 66 pellets and further 2g of fullerene ("Mixed Fullerene" (product name) of Frontier Carbon Corp.) were melted and mixed. An obtained resin composition was employed as a source resin material and injection-molded to produce a test piece R with a diameter of 50 mm and a thickness of 3 mm.

**Characteristics of test pieces A ~ T are shown in Tables 1 and 2.**

**TABLE 1**

| **COMPOSITION OF TEST PIECES** | | | | | |
|---|---|---|---|---|---|
| Test Piece | Base Resin | RBC, CRBC Average particle diameter, microns | RBC, CRBC Added amount, Wt% | Glass Fibers Added amount, Wt% | Fullerenes Added amount, Wt% |
| A | PA66 | - | 0 | - | - |
| B | | 150 | 30 | - | - |
| C | | 150 | 50 | - | - |
| D | | 30 | 50 | - | - |
| E | | 150 | 70 | - | - |
| F | | 150 | 10 | - | - |
| G | | 150 | 20 | - | - |
| H | | - | 0 | 23 | - |
| I | | 150 | 10 | 23 | - |
| J | | 30 | 30 | - | - |
| K | | 30 | 70 | - | - |
| L | | 3 | 5 | - | - |
| M | | 3 | 10 | - | - |
| N | | 3 | 20 | - | - |
| O | | 3 | 30 | - | - |
| P | | 3 | 50 | - | - |
| Q | | 3 | 30 | - | 0.1 |
| R | | 3 | 30 | - | 0.5 |
| S | | 3 | 30 | - | 1 |
| T | | 3 | 30 | - | 2 |

**TABLE 2**

| MECHANICAL CHARACTERISTICS | | | | | |
|---|---|---|---|---|---|
| Test piece | Tensile Strength, MPa | Compression Strength, Mpa | Bending Strength, MPa | Bending Elasticity, GPa | Poisson's ratio |
| A | 78.5 | 105 | 117.7 | 2.79 | 0.4 |
| B | 57.3 | 160 | 101 | 4.35 | 0.35 |
| C | 64.6 | 173 | 98.6 | 6.12 | 0.32 |
| D | 78.4 | 178 | 116 | 6.39 | 0.33 |
| E | 61.4 | 179 | 97.9 | 6.14 | 0.32 |
| F | 45.8 | 141 | 88.1 | 3.13 | 0.37 |
| G | 50.4 | 145 | 86.9 | 3.69 | 0.36 |
| H | 137.3 | 170 | 225.6 | 6.67 | 0.38 |
| I | 104 | 169 | 163 | 6.69 | 0.38 |
| J | 70.2 | 168 | 119 | 4.48 | 0.36 |
| K | 76.5 | 228 | 120 | 8.85 | 0.3 |
| L | 86.3 | 136 | 136.2 | 3.76 | 0.4 |
| M | 86.1 | 144 | 137.2 | 3.94 | 0.4 |
| N | 79.4 | 171 | 133.3 | 4.47 | 0.39 |
| O | 79.4 | 193 | 131.7 | 4.85 | 0.36 |
| P | 82.9 | 225 | 150.8 | 7.11 | 0.35 |
| Q | 81.5 | 191 | 126.5 | 4.82 | 0.36 |
| R | 91.7 | 204 | 159.6 | 5.33 | 0.36 |
| S | 95.6 | 206 | 157.6 | 5.04 | 0.35 |
| T | 71.3 | 216 | 135.3 | 5.52 | 0.36 |

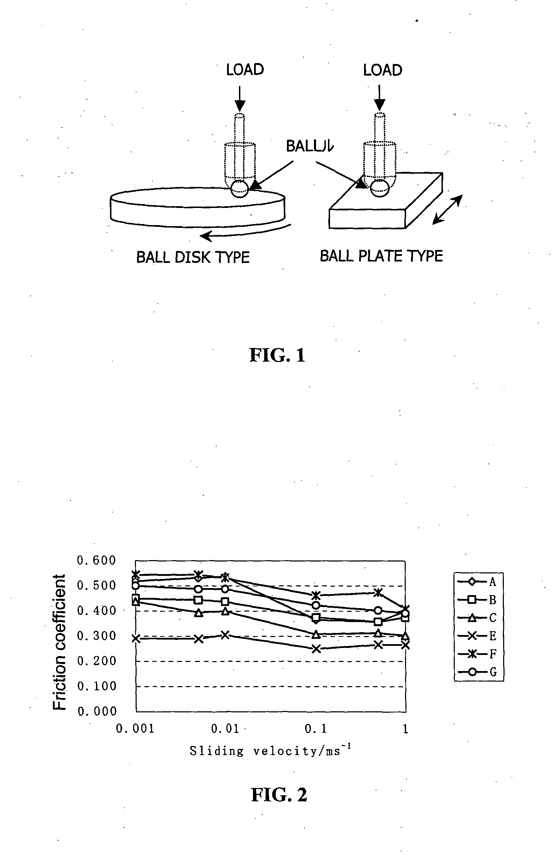

The following tests were conducted on test pieces A ~ T employing a wear test machine which is illustrated in Figure 1. The test conditions are shown in Tables 3 and 4.

### MEASUREMENT OF FRICTION COEFFICIENT

Friction coefficients were measured using balls of SUJ2φ1mm with a modulus of elasticity of 206Gpa, and Poisson's ratio of 0.3 as shown in Table 3, under the conditions as shown in Table 4 with a load of 0.49N, a stroke of 5mm (at 0.001-1.0 m/s), and with no lubricant or with a standard ester lubricant oil.

**TABLE 3**

| **MECHANICAL ATTRIBUTES OF A BALL TEST PIECE** | |
|---|---|
| Test piece | SUJ2 |
| Curvature radius, mm | 1 |
| Modulus of Elasticity, GPa | 206 |
| Poisson's ratio | 0.3 |

**TABLE 4**

| **CONDITIONS FOR THE EXPERIMENT0** | | |
|---|---|---|
| | Low speed area | High speed area |
| Vertical Load, N | 0.49 | 0.49 |
| Slip velocity, ms⁻¹ | 0.001, 0.005, 0.01 | 0.1, 0.5,1 |
| Stroke/mm | 5 | - |
| Lubrication | Dry | Dry |
| | Ester oil (dropped) | Ester oil (dropped) |
| | Ester oil (thin film) | |

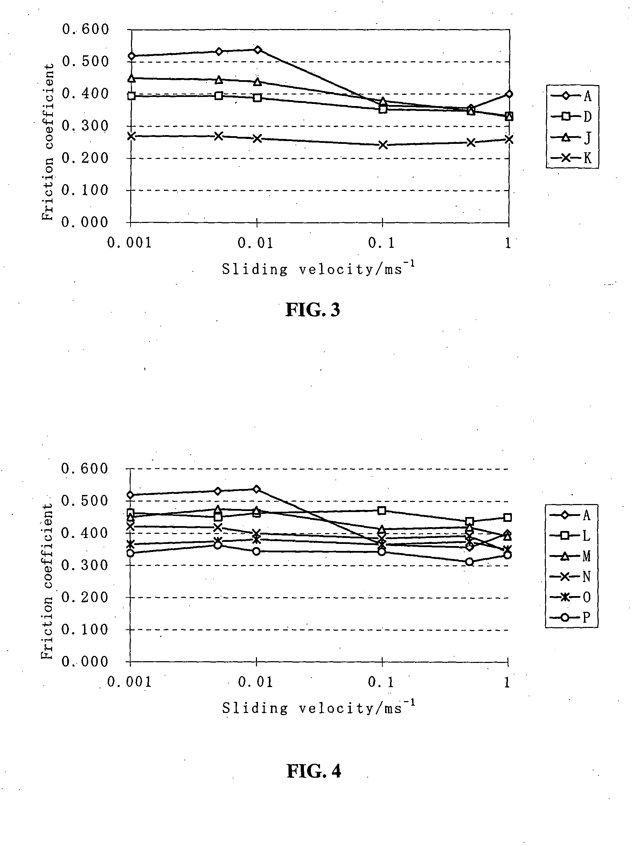

The results are summarized in Tables 5 and 6, and illustrated in Figures 2 ~ 11.

**TABLE 5**

| FRICTION COEFFICIENT WITH NO LUBRICANT | | | | | | |
|---|---|---|---|---|---|---|
| | Slip velocity (m/s) | | | | | |
| Test piece | 0.001 | 0.005 | 0.01 | 0.1 | 0.5 | 1 |
| A | 0.519 | 0.531 | 0.538 | 0.365 | 0.357 | 0.400 |
| B | 0.450 | 0.444 | 0.437 | 0.375 | 0.357 | 0.375 |
| C | 0.437 | 0.394 | 0.400 | 0.308 | 0.313 | 0.303 |
| D | 0.394 | 0.394 | 0.388 | 0.352 | 0.348 | 0.332 |
| E | 0.290 | 0.290 | 0.305 | 0.250 | 0.266 | 0.266 |
| F | 0.544 | 0.544 | 0.531 | 0.462 | 0.473 | 0.408 |
| G | 0.500 | 0.488 | 0.488 | 0.423 | 0.402 | 0.392 |
| H | 0.570 | 0.565 | 0.575 | 0.458 | 0.416 | 0.350 |
| I | 0.513 | 0.506 | 0.500 | 0.413 | 0.384 | 0.350 |
| J | 0.450 | 0.444 | 0.438 | 0.379 | 0.348 | 0.330 |
| K | 0.269 | 0.269 | 0.262 | 0.242 | 0.250 | 0.260 |
| L | 0.463 | 0.450 | 0.463 | 0.471 | 0.438 | 0.450 |
| M | 0.450 | 0.475 | 0.472 | 0.413 | 0.420 | 0.392 |
| N | 0.421 | 0.418 | 0.400 | 0.385 | 0.393 | 0.343 |
| O | 0.366 | 0.375 | 0.381 | 0.365 | 0.375 | 0.350 |
| P | 0.338 | 0.363 | 0.344 | 0.343 | 0.313 | 0.333 |
| Q | 0.400 | 0.375 | 0.363 | 0.356 | 0.321 | 0.311 |
| R | 0.356 | 0.388 | 0.381 | 0.356 | 0.333 | 0.292 |
| S | 0.372 | 0.400 | 0.372 | 0.343 | 0.312 | 0.300 |
| T | 0.363 | 0.379 | 0.381 | 0.372 | 0.327 | 0.311 |

**TABLE 6**

| **FRICTION COEFFICIENT WITH ESTER OIL LUBRICANT** | | | | | | |
|---|---|---|---|---|---|---|
| | Slip velocity (m/s) | | | | | |
| Test piece | 0.001 | 0.005 | 0.01 | 0.1 | 0.5 | 1 |
| A | 0.343 | 0.245 | 0.131 | 0.029 | 0.027 | 0.025 |
| B | 0.084 | 0.075 | 0.075 | 0.054 | 0.035 | 0.043 |
| C | 0.094 | 0.094 | 0.103 | 0.079 | 0.048 | 0.066 |
| D | 0.094 | 0.094 | 0.097 | 0.110 | 0.080 | 0.075 |
| E | 0.107 | 0.100 | 0.106 | 0.092 | 0.075 | 0.050 |
| F | 0.125 | 0.125 | 0.125 | 0.058 | 0.034 | 0.042 |
| G | 0.125 | 0.088 | 0.081 | 0.025 | 0.027 | 0.020 |
| H | 0.230 | 0.170 | 0.165 | 0.042 | 0.033 | 0.050 |
| 1 | 0.144 | 0.081 | 0.069 | 0.056 | 0.023 | 0.033 |
| J | 0.100 | 0.088 | 0.088 | 0.083 | 0.079 | 0.055 |
| K | 0.119 | 0.119 | 0.125 | 0.125 | 0.089 | 0.072 |
| L | 0.147 | 0.084 | 0.063 | 0.048 | 0.041 | 0.042 |
| M | 0.140 | 0.085 | 0.063 | 0.077 | 0.045 | 0.037 |
| N | 0.100 | 0.084 | 0.075 | 0.038 | 0.032 | 0.027 |
| O | 0.075 | 0.068 | 0.060 | 0.067 | 0.054 | 0.050 |
| P | 0.091 | 0.094 | 0.100 | 0.048 | 0.045 | 0.047 |
| Q | 0.088 | 0.066 | 0.066 | 0.047 | 0.048 | 0.041 |
| R | 0.081 | 0.084 | 0.069 | 0.048 | 0.041 | 0.047 |
| S | 0.075 | 0.060 | 0.063 | 0.041 | 0.038 | 0.047 |
| T | 0.084 | 0.069 | 0.063 | 0.045 | 0.050 | 0.048 |

Figures 2, 3 and 4 show a relationship between the friction coefficient and slip speed with no lubrication under atmosphere for the test pieces employing fine RBC or CRBC powder with an average particle diameter of 150 microns, 30 microns and 3 microns, respectively. It was found that fine RBC or CRBC powder has effects to lower the friction coefficient of nylon 66, and to reduce differences in friction coefficient between a low and a high speed range.

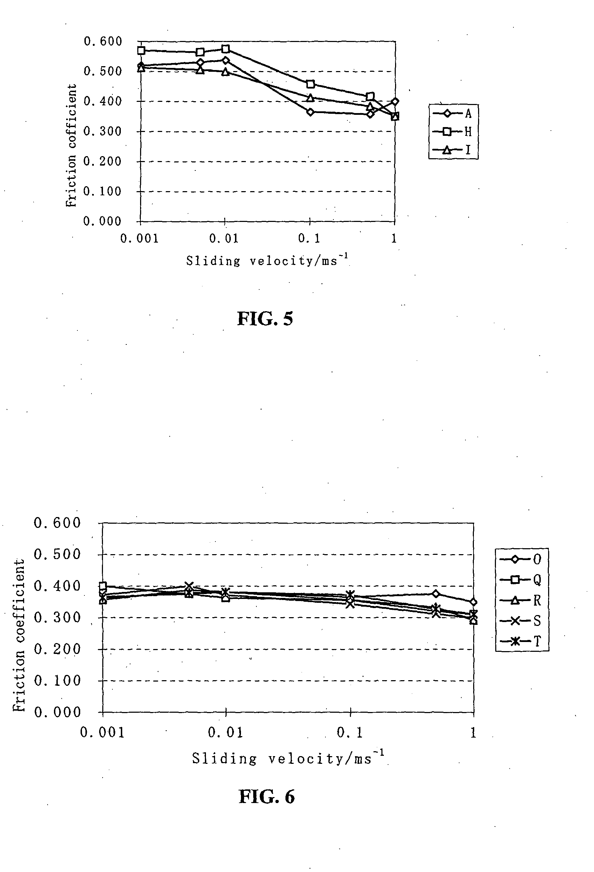

Figure 5 shows a relationship between the friction coefficient and the slip velocity of the test pieces containing glass fibers with no lubrication under atmosphere. It was found that fine RBC or CRBC powder has effects to lower the friction coefficient of nylon 66, and to reduce the difference in friction coefficient between a low and high speed range.

Figure 6 shows a relationship between the friction coefficient and the slip velocity of the test pieces comprising fine RBC powder with an average particle diameter of 3 microns, PA66 pellets and fullerene under atmosphere with no lubricant. It was found that fullerene has no adverse effect on a friction coefficient.

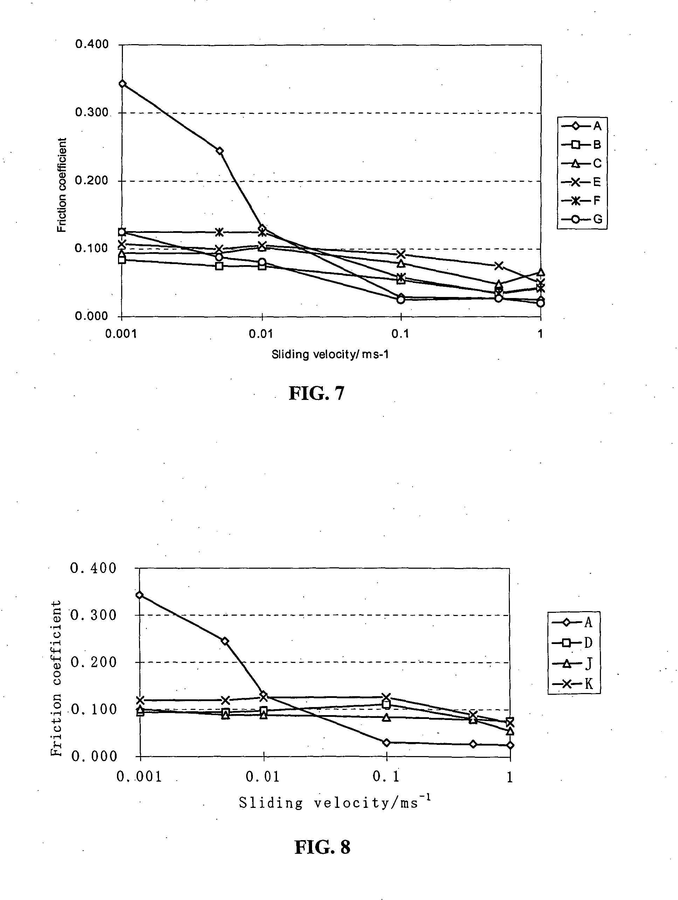

Figures 7, 8 and 9 show a relationship between the friction coefficient and the slip velocity of the test pieces containing fine RBC or CRBC powder with an average particle diameter of 150 microns, 30 microns and 3 microns, respectively, with an ester lubricant oil. It was found that fine RBC and CRBC powder have effects to significantly lower the friction coefficient of nylon 66 and further to reduce differences in friction coefficient between a low and high speed range.

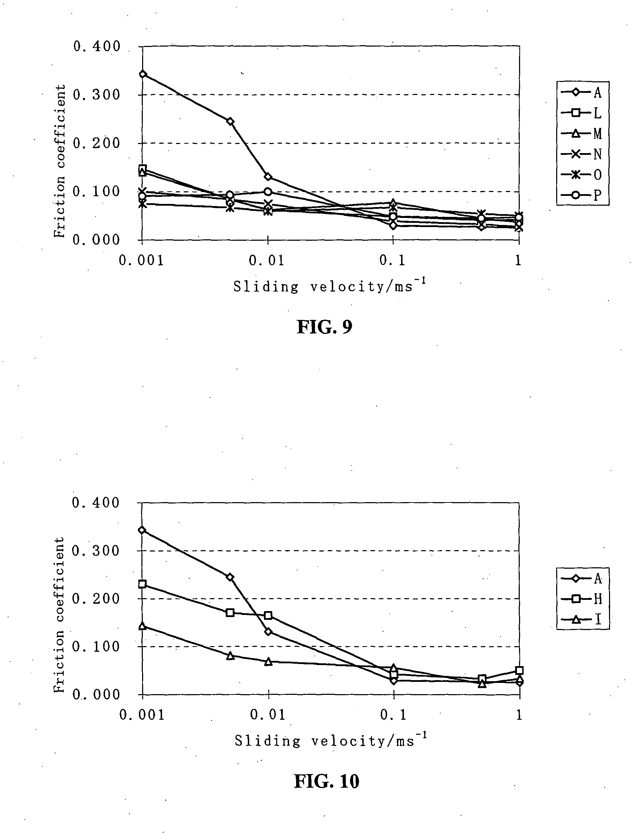

Figure 10 shows a relationship between the friction coefficient and the slip velocity of the test pieces containing glass fibers with an ester oil lubricant. It was found that fine RBC powder and fine CRBC powder has effects to significantly lower the friction coefficient of nylon 66 and further to reduce the differences in friction coefficient between a low and high speed range.

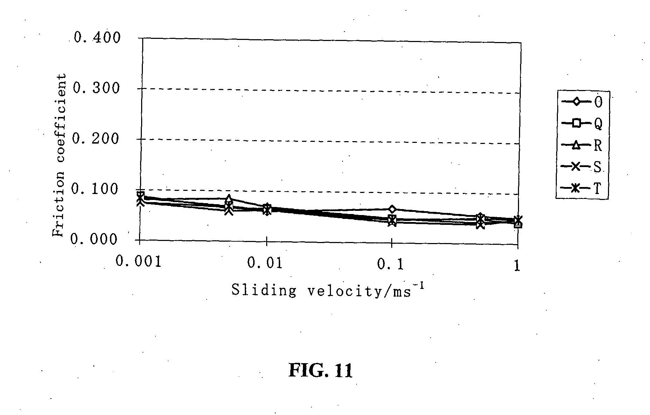

Figure 11 shows a relationship between the friction coefficient and slip velocity of the test pieces comprising fine RBC powder with an average particle diameter of 3 microns, PA66 pellets and further fullerene with an ester oil lubricant. It was found that fullerene does not adversely impact the friction coefficient.

It was found that the stability of friction coefficients against slip velocity is improved by mixing fine RBC or CRBC powder with nylon 66 under atmosphere with no lubricant or with an ester oil lubricant.

### MEASUREMENT OF WEAR LOSS

Under the condition as shown in Table 4 with a load of 0.49N, a stroke of 5mm (at 0.001 ~ 1.0m/s) with no lubricant or with an ester oil lubricant, specific wear losses were measured using balls of SUJ2φ1mm with a modulus of elasticity of 206GPa and Poisson's ratio 0.3 as shown in Table 3.

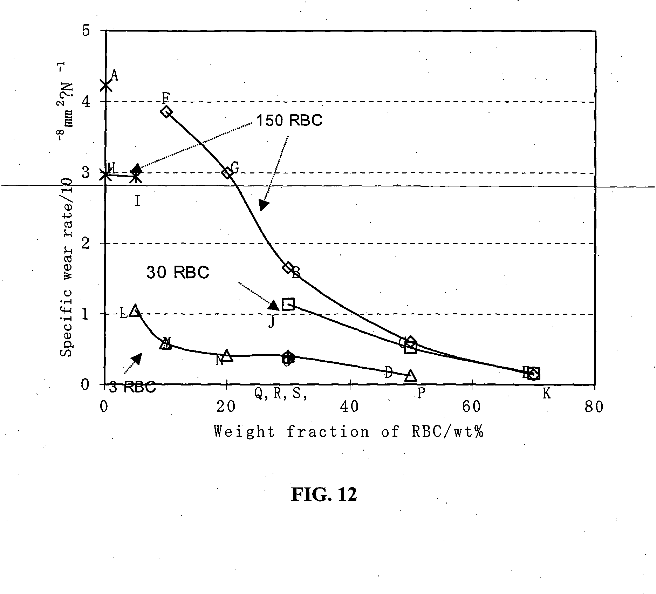

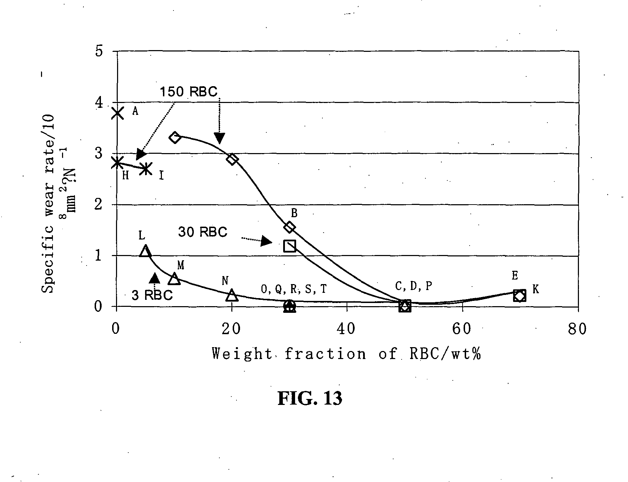

The results are summarized in Table 7 and illustrated in Figures 12 and 13.

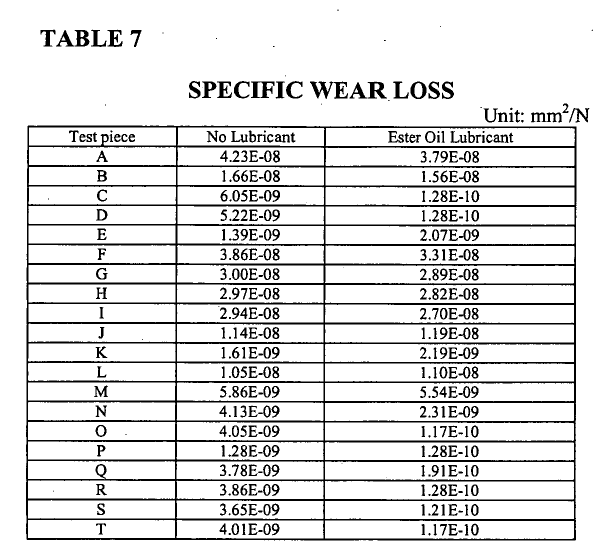

Figure 12 shows a relationship between the specific wear loss and the amount of contained fine RBC or CRBC powder under atmosphere with no lubricant. It illustrates that when a larger amount of fine RBC or CRBC powder is contained, or when the average particle diameter is smaller, the specific wear loss is smaller. It is found that fine RBC and fine CRBC powder particles improved the wear resistance of nylon 66 by as much as 30 times. Moreover it shows that fullerene causes no adverse effect on wear resistance under atmosphere with no lubricant.

Figure 13 shows a relationship between the specific wear loss and the amount of contained fine RBC or CRBC powder with a thin film of ester oil lubricant. The thin ester oil film was produced by immersing the wear test pieces for 3 minutes in an ester oil which is diluted with a solvent to 0.005 Wt% and then drying them in a desiccator for 2 minutes.

Test pieces C and D among the test pieces employing fine RBC powder with an average particle diameter of 150 microns or 30 microns, and all the test pieces employing fine RBC powder with an average particle diameter of 3 microns exhibited small specific wear losses which are a 200^{th} ~ 300^{th}, or less, of those with no lubricant. Consequently, it is thought that, in particular when fine RBC or CRBC powder with an average particle diameter of 150 microns or 30 microns is employed, remarkably excellent lubricant oil retention characteristics were demonstrated in a vicinity of 50Wt%. Moreover, when fine RBC powder with an average particle diameter of 3 microns was employed, remarkably excellent lubricant oil retention characteristics were demonstrated in a vicinity of 30 ~ 50 Wt%, and thus, there is a wider range in the amount of contained fine RBC powder. Moreover, it is found that fullerene causes no adverse effect on specific wear resistance even with a thin film of ester lubricant oil.

### EVALUATION OF RETENTIVE CHARACTERISTICS OF LUBRICANT OIL

Under conditions of a load of 0.49N, a stroke of 5mm and a slip velocity of 0.01m/s, with a thin lubricant film of ester oil, employing balls of SUJ2φ1mm with an elastic ratio of 206GPa and a Poisson's ratio of 0.3 as shown in Table 3, sliding with friction was performed back and forth until the ester oil thin film showed no lubricity. The number of sliding repetitions until the friction coefficient exceeded 0.2 is defined as the critical number of repetitions under friction. A larger value of this number means that the lubricity of an ester oil thin film was maintained for a longer time period, indicating better lubricant oil retention characteristics.

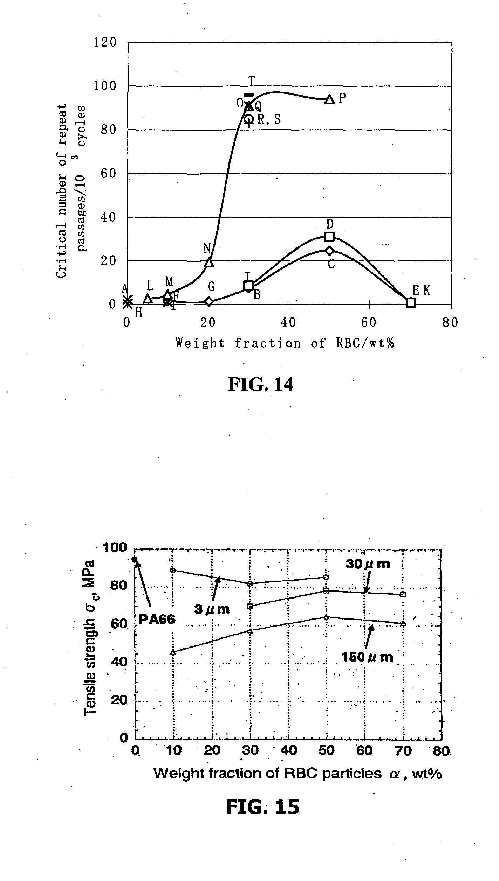

The results are shown in Table 8 and Figure 14.

**TABLE 8**

| **THE CRITICAL NUMBER OF REPETITIONS UNDER FRICTION** | |
|---|---|
| Test piece | Critical number of repetitions under friction (x 10³ times) |
| A | 2.1 |
| B | 7.5 |
| C | 24.6 |
| D | 31 |
| E | 1.2 |
| F | 1.4 |
| G | 1.4 |
| H | 0.2 |
| I | 1.1 |
| J | 8.7 |
| K | 0.8 |
| L | 2.7 |
| M | 4.6 |
| N | 19.5 |
| O | 91 |
| P | 94 |
| Q | 91 |
| R | 85 |
| S | 83 |
| T | 96 |

Figure 14 shows a relation between the critical number of repetitions under friction and the amount of contained fine RBC and CRBC powder with a thin ester oil lubricant film.

The thin ester oil film was produced by immersing friction test pieces for 3 minutes in the ester oil which is diluted with a solvent to 0.005 Wt% and then dehydrated in a desiccator for 2 minutes.

It is found that the test pieces containing fine RBC or CRBC powder exhibited larger critical numbers of repetitions under friction than test piece A which does not contain fine RBC nor CRBC powder, demonstrating improved lubricant oil retention characteristics. In particular, test pieces containing fine RBC powder with an average particle diameter of 3 microns demonstrated excellent lubricant oil retention characteristics. When 30 Wt% of fine RBC powder is mixed, superior lubricant oil retention characteristics are obtained when 50 Wt% of fine RBC powder with an average particle diameter of 150 microns or 30 microns is mixed. Thus, the issues which conventional bearing retainers have can be resolved through remarkable improvements in the characteristics. Furthermore, it was found that fullerene has no adverse effect on the lubricant oil retention characteristics.

### Example 20 - No Lubrication

### Test Specimens

RBC particles with the average diameters of 150µm, 30µm and 3µm were kneaded with PA66 using a biaxial extruder at the weight fractions described in Table 9 respectively, and then were shaped as pellets and injected to create specimens for the strength test and the friction (Disk type, diameter of 50mm, thickness of 3mm.).

**TABLE 9:**

| Type of test specimens | | | |
|---|---|---|---|
| Test specimen | Base resin | Average particle diameter of RBC particles (µm) | Weight fraction of RBC particle (wt%) |
| A | PA66 | - | 0 |
| B | | 150 | 10 |
| C | | | 30 |
| D | | | 50 |
| E | | | 70 |
| F | | 30 | 30 |
| G | | | 50 |
| H | | | 70 |
| I | | 3 | 10 |
| J | | | 30 |
| K | | | 50 |

### Strength test

In accordance with JIS K 7113, JIS K 7171, the tensile test and the flexural test were conducted to evaluate the tensile strength, the flexural strength, and the flexural modulus of each test specimen.

### Method of friction and abrasion test

An SUJ2 ball (R = 1mm) was placed so that it comes into contact with the surface of a disk specimen and a load of 0.49N was imposed. At a fixed speed, the specimen was put into a reciprocating motion with a stroke of 5mm (Sliding velocity 0.001m/ s to 0.01m/s) or a rotary motion in a single direction (Sliding velocity 0.1m/s to 1m/s.) and thereby the sliding friction test was performed. Furthermore, frictions were repeated for 1,000 times in the friction test and 40,000 times in the abrasion test.

### Test result and observation

Fig. 15, Fig. 16, and Fig. 17 describe the influence of the weight fraction of RBC particles on the tensile strength, the flexural strength and the flexural modulus of each test specimen respectively.

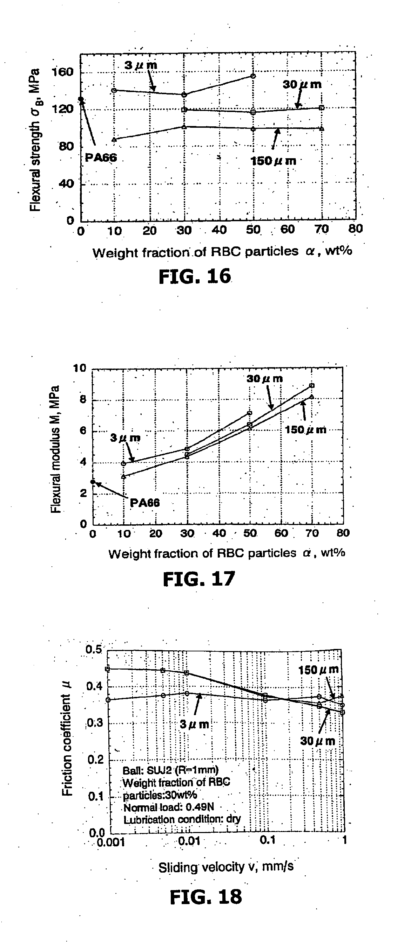

Fig. 15 and Fig. 16 show that both the tensile strength and the flexural strength reach their maximum, when the average diameter of RBC particles is 3µm. Regarding the tensile strength and the flexural strength, the influence of the average particle diameter is more significant than the influence of the weight fraction of RBC particles. According to Fig. 17, the higher the weight fraction of RBC particles and the smaller RBC average particle diameter, the larger the flexural modulus.

Fig. 18 describes the relationship between the friction coefficient and the sliding velocity of the specimen in which RBC particles are combined at 30wt% in the atmosphere without lubrication. Fig. 18 shows that in the case in which the average diameter is 3µm, compared to the cases in which the average diameters are 150µm and 30µm, there was less decrease in the friction coefficient accompanying the increase in the sliding velocity exhibiting a superior stability of the friction coefficient against the sliding velocity.

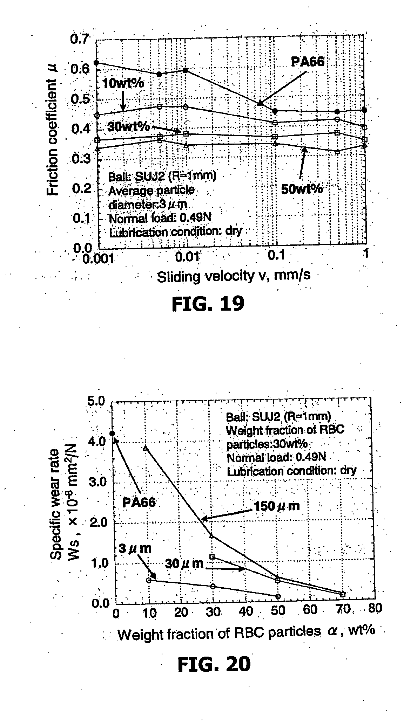

Fig. 19 describes the relationship between the friction coefficient and the sliding velocity of the test specimen in which RBC particles with average particle diameter of 3µm were combined, in the atmosphere without lubrication. Fig. 19 verifies that the higher the RBC weight fraction, the smaller the friction coefficient value.

Fig. 20 describes the influence of the weight fraction of RBC particles on specific wear rate in the atmosphere without lubrication. It is clear that when the weight fraction of RBC particles is larger and the average particle diameter is smaller, a superior abrasion tolerance is observed. The weight fraction of RBC particles at which specific wear rate is 10⁻⁸mm²/ N or lower is 50wt% or higher when the average particle diameter is 150µm or 30µm. Compared to this, when the average particle diameter is 3µm, the figure is 10wt% or higher showing an improvement in the abrasion tolerance even with a small amount of mixing.

Based on the points mentioned above, regarding PA66 combined with RBC particles, it became clear that when the average particle diameter of RBC particles is smaller, material strength is improved, and that when the average particle diameter is smaller and the weight fraction is higher, excellent friction and abrasion properties are observed.

Thus, the influences of the average particle diameter and the weight fraction of RBC particles on the material strength and friction and abrasion properties of PA66 combined with RBC particles in the atmosphere without lubrication were verified through experiments.
(1) When the average particle diameter of RBC particles is smaller, the tensile strength and the flexural strength are higher, and when the average particle diameter of RBC particles is smaller and the weight fraction in higher, the flexural modulus becomes higher.
(2) When the weight fraction of RBC particles is higher, there is less friction, and when the average particle diameter of RBC particles is 3µm, the best stability in the friction coefficient against the sliding velocity is observed.
(3) When the average particle diameter of RBC particles is smaller and the weight fraction is higher, abrasion tolerance is improved.

### Example 21 With Lubrication

### Test specimen

RBC particles with the average diameter of 150µm, 30µm and 3µm were kneaded with PA66 through biaxial extruder at the weight fractions described in Table 9 above, and then were shaped as pellets and injected to create disk type specimens for the friction test with a diameter of 50mm and a thickness of 3mm.

### Friction Test

Ester oil was dropped on a disk type test specimen, and then an SUJ2 ball (R=1mm) was placed so that it comes into contact with the surface of the disk specimen and a load of 0.49N was imposed. At a fixed speed, the test specimen was put into a reciprocating motion with a stroke of 5mm (Sliding velocity: 0.001m/s to 0.01m/s) or a rotary motion in a single direction (Sliding velocity: 0.1m/ s to 1m/ s.) and thereby the test to evaluate the friction coefficient was conducted. Frictions were repeated for 1,000 times.

Subsequently, a specimen was immersed for 3 minutes in the ester oil which was diluted with organic solvent to 50ppm. Then the specimen was transferred to a desiccator and deaerated and dried for 2 minutes to fabricate a thin film of ester oil on the test specimen. An SUJ2 ball (R = 1mm) was placed so that it comes into contact with the surface of the test specimen and a load of 0.49N was imposed. The specimen was put into a reciprocating motion at 0.01m/s and thereby the evaluation test of lubricant retention was conducted. The test was continued until the friction coefficient exceeded 0.2. The number of friction repetitions at which the friction coefficient exceeds 0.2 was determined as the critical number of friction repetitions and was set as the evaluation criterion of the lubricant retention properties.

### Result and observation

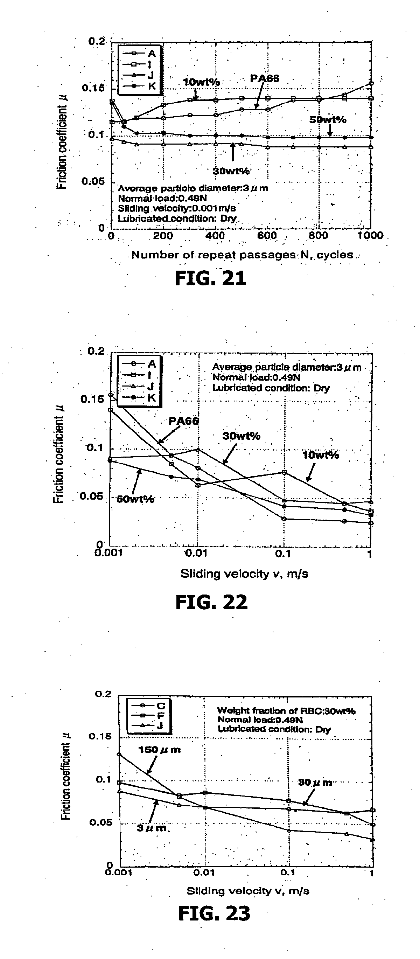

Fig. 21 shows the friction progress curve of the test specimen combined with RBC particles with the average particle diameter of 3µm with lubrication by ester oil (Sliding velocity 0.001m/ s.) On the test specimen in which no RBC particle was combined, even when friction was repeated for 1,000 times, the friction coefficient keeps increasing. On the contrary, on the test specimen in which RBC particles are combined, after repeating friction for 200 times, the friction coefficient remains at an almost stable value without any fluctuation with time. Similarly on the test specimen in which RBC particles were combined at 30wt% or 50wt%, low friction coefficient is observed. However, it is clear that on the test specimen in which 10wt% of RBC particles are combined, the friction coefficient is high as in the case of the test specimen in which no RBC is combined. Like this, it is obvious that combining RBC particles of 30wt% or more in PA66 drastically reduces the friction coefficient.

Fig. 22 shows the relationship between the friction coefficient and the sliding velocity of the test specimen combined with RBC particles with the average particle diameter of 3 µm with lubrication using ester oil. In the case of the test specimen in which no RBC particle is combined, the friction coefficient drastically decreases as the sliding velocity increases. On the contrary, in the case of the test specimen combined with RBC particles, a stable friction coefficient against the sliding velocity is observed. Especially when the weight fraction is 30wt% or higher, it is clear that stability of the friction coefficient against the sliding velocity is improved tremendously.

Fig. 23 shows the influence of the average particle diameter of RBC particles on the relationship between the friction coefficient and the sliding velocity of the test specimen with the weight fraction of RBC particles of 30wt%, with lubrication using ester oil. It is clear that the rate of decrease in the friction coefficient accompanying the increase in the sliding velocity is not much influenced by the average particle diameter. Based on the points mentioned above, it can be said that the stability of the friction coefficient against the sliding velocity substantially depends on the weight fraction of RBC particles rather than the average particle diameter.

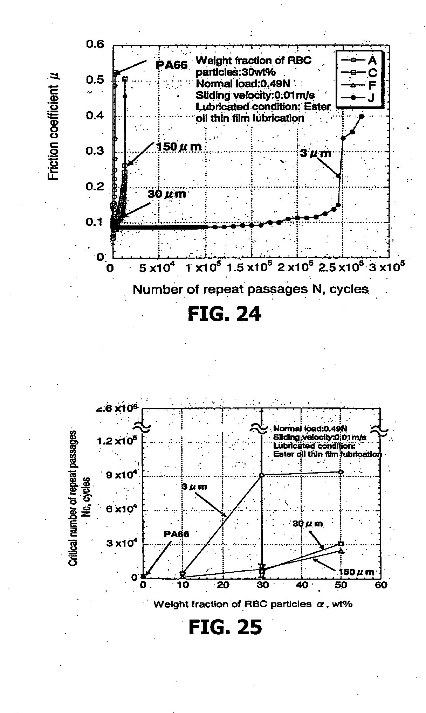

Fig. 24 shows the friction progress curve with lubrication by a thin film of ester oil. It is found that as a result of combining RBC particles, compared to the cases without any RBC particles, a lower and more stable friction coefficient is maintained for longer period of time and that retention of lubricant oil layer on the surface of test material is improved.

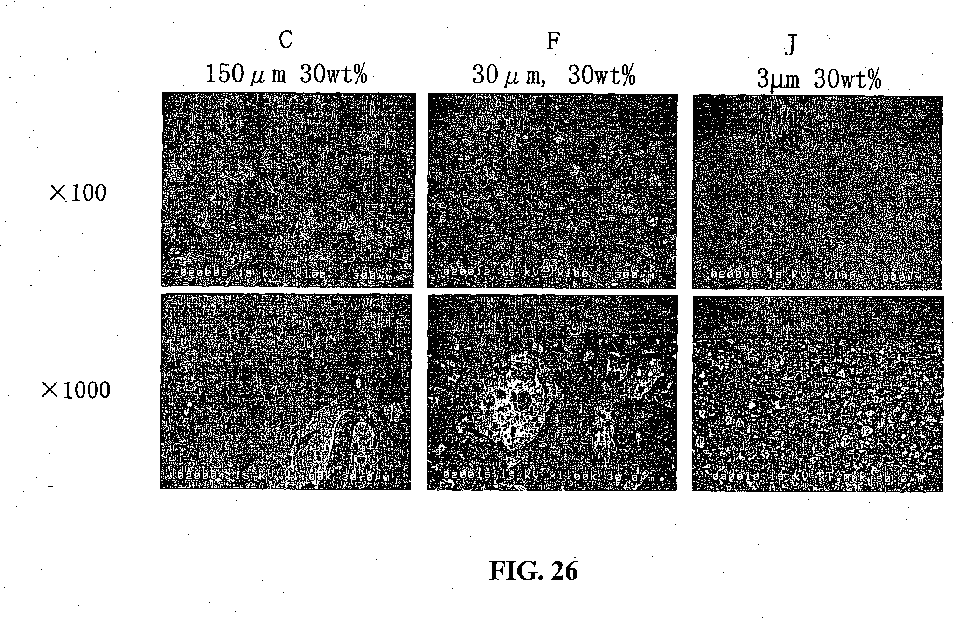

Fig. 25 describes the influence of the weight fraction of RBC particles on the critical number of friction repetitions with lubrication by a thin film of ester oil. The Fig. shows that when the average particle diameter of RBC particles is smaller and when the weight fraction is 30-50wt%, retention of lubricant oil film is excellent. The average critical number of friction repetition of the test specimen in which RBC particles with the average particle diameter of 3µm are combined at 30wt% is approximately 9 x 10⁴ times (25 x 10⁴ times at maximum.) On the contrary, on the test specimen without RBC particles, the figure is approximately 2 x 10³ times showing the maximum difference of 125 times. Therefore it was identified that combining RBC particles at 30 to 50wt% significantly improves the retention of lubricant oil film.
Referring to Fig. 26, electron micrographs at 100 and 1000 photo magnification are shown for test pieces of Example 20, namely C, RBC particles 150µm and 30wt % and F RBC particles 30µm and 30 wt% and J RBC particles 3µm and 30 wt%. The electron micrographs show dispersion is more uniform when the average particle diameter is small and is most uniform in the 3µm embodiment of test piece J.

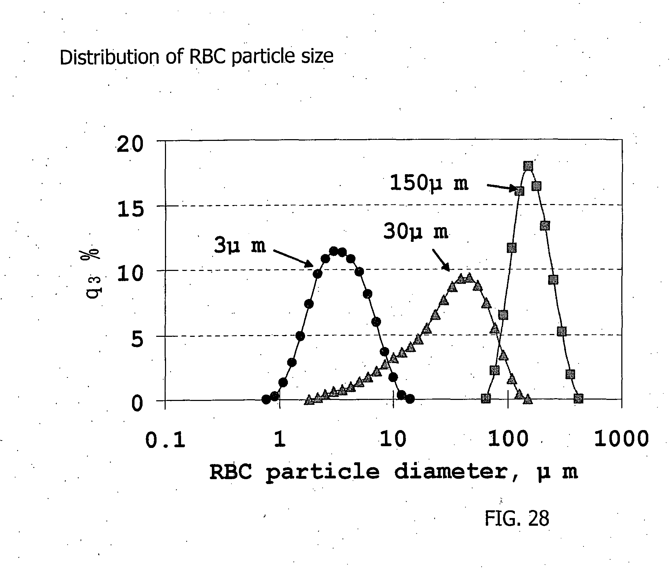

Fig. 28 shows the particle size distribution of RBC for 3µm, 30µm and 150µm RBC test pieces. The experiments show the influence of the average particle diameter and the weight fraction of RBC particles on the friction properties of PA66 combined with RBC particles with lubrication.
(1) Combining RBC particles with PA66 at 30wt% or more can reduce the fluctuation of the friction coefficient with time and can also improve the stability of the friction coefficient against the sliding velocity.
(2) When the weight fraction of RBC particles with the average particle diameter of 3µm is 30wt% to 50wt%, the best retention of lubricant oil film is observed, and that compared to the cases without RBC particles, it is possible to maintain less friction for approximately 125 times longer period time at maximum.

The foregoing is considered as illustrative only to the principals of the invention. Further, since numerous changes and modification will occur to those skilled in the art, it is not desired to limit the invention to the exact construction and operation shown and described above, and accordingly, all suitable modifications and equivalents may be resorted to falling within the scope of the invention.

## Claims

1. A synthetic resin composition for the manufacture of articles having a low coefficient of friction comprising:
a) a fine powder selected from the group consisting of RBC , CRBC and mixtures of RBC and CRBC;
b) said fine powder having an average particle diameter of less than 10µm, preferably 1*µ*m to less than 10*µ*m;
c) said fine powder being 10% or more, preferably 10% to 70%, of the total composition by weight; and
d) a synthetic resin.

2. The synthetic resin composition according to claim 1 wherein said fine powder has an average particle diameter of about 1µm to about 5 µm, preferably about 3 *µ*m to about 5 *µ*m, and more preferred about 3 *µ*m.

3. The synthetic resin composition according to claim 1 or 2, wherein said synthetic resin is one or more resin selected from the group consisting of polyamide, polyester, polyolefin, polyacetal, an aromatic nylon, nylon 66 (polyhexamethylene adipamide), nylon 6 (polycapramide), nylon 11 (polyundecanamide), nylon 12 and polyphthalamide, polybutylene terephthalate, polyethylene terephthalate, polypropylene, polyethylene and POM.

4. The synthetic resin composition according to claim 1, 2 or 3 wherein said fine powder is 30% to 70% of the total composition by weight, preferably 40% to 70% of the total composition by weight, more preferred 50% to 70% of the total composition by weight, and even more preferred 30% to 50% of the total composition by weight.

5. The synthetic resin composition according to claim 1, 2, 3 or 4, further comprising e) inorganic and/or organic fibers in an amount of 0.1 to 50 Wt% of the entire composition.

6. The synthetic resin composition according to claim 5, wherein the fibers are short.

7. The synthetic resin composition according to claim 5 or 6, wherein the inorganic fibers are glass fibers.

8. The synthetic resin composition according to any one of claims 1 to 7, further comprising carbon clusters mixed therein.

9. The synthetic resin composition according to claim 8, wherein the amount of said carbon clusters is 0.1 to 5 Wt% of the entire composition.

10. The synthetic resin composition according to claim 8 or 9, wherein said carbon clusters are one or more fullerenes .

11. The synthetic resin composition according to claim 8, 9 or 10, wherein said carbon clusters are a mixture of fullerene60 and fullerene70.

12. The synthetic resin composition of any one of claims 1 to 11, wherein the fine powder is evenly dispersed therein

13. A part for a bearing assembly made from the composition of any one of claims 1 to 12.

14. The part for a bearing assembly according to claim 13 wherein said part is a roller bearing, a bearing retainer, or a spike pin.

15. A quiet brake made from the composition of any one of claims 1 to 12.

16. A bearing retainer molded from a synthetic resin composition according to any one of claims 1 to 12.

17. The devices according to any one of claims 13 to 16 produced by injection molding.
